# EUROPEAN PATENT SPECIFICATION

(11) **EP 2 751 951 B1**
(45) Date of publication and mention of the grant of the patent: **28.02.2018**
(21) Application number: 11871479.9
(22) Date of filing: 31.08.2011
(51) Int. Cl.: H04L 12/10, H02J 1/00, H04L 29/06, G05F 1/67, G06F 1/26, H02J 5/00, G05B 15/02, G06F 1/32

(54) **POWER DRAWN BY NETWORK POWERED DEVICE**
AUS EINER NETZWERKGESPEISTEN VORRICHTUNG BEZOGENER STROM
PUISSANCE TIRÉE PAR UN DISPOSITIF ALIMENTÉ EN RÉSEAU

(43) Date of publication of application: 09.07.2014
(73) Proprietor: Hewlett-Packard Development Company, L.P., Houston, TX 77070 (US)
(72) Inventor: BROOKS, Robert, C., Houston, Texas 77070 (US); FLYNN, Thomas, J., Houston, Texas 77070 (US); SHAVER, Charles, N., Houston, Texas 77070 (US)
(74) Representative: Liesegang, Eva
(86) International application number: PCT/US2011/049872
(87) International publication number: WO 2013/032455

(56) References cited:
- US-A1- 2006 112 288
- US-A1- 2006 164 769
- US-A1- 2007 257 780
- US-A1- 2007 257 780
- US-A1- 2008 052 546
- US-A1- 2008 250 255
- US-A1- 2008 276 104
- US-A1- 2008 288 794
- US-A1- 2010 042 855

## Description

### BACKGROUND

Computing systems today are connected via various networks, for example wired networks such as Ethernet. As these networks have developed, devices have been developed that are capable of being powered via these network connections. The Institute of Electrical and Electronics Engineers (IEEE) has developed the IEEE 802.3af and 802.3at standards that define Power over Ethernet. Power over Ethernet systems involve delivering power from a Power Sourcing Equipment (PSE) to a Powered Device (PD) located at opposite ends of a network connection.

### BRIEF DESCRIPTION OF THE DRAWINGS

The following detailed description references the drawings, wherein:
FIG. 1 is a block diagram of a system including devices powered by power sourcing equipment, according to one example;
FIGs. 2A and 2B are block diagrams of powered devices capable of setting a power load to determine power available to the respective powered devices, according to various examples;
FIG. 3 is a flowchart of a method for determining power available at a powered device, according to one example;
FIG. 4 is a flowchart of a method for determining power available at a powered device, according to one example; and
FIG. 5 is a diagram of a power circuit used to determine power available at a powered device, according to one example.

### DETAILED DESCRIPTION

As detailed above, power can be provided from power sourcing equipment (PSE) to powered devices (PDs) via network connections. Increasingly, more and more types of devices are being developed to run as PDs powered by network connections. Standards, for example, the Institute of Electrical and Electronics Engineers (IEEE) 802.3af and IEEE 802.3at standards provide specifications to implement Power over Ethernet (PoE). The new 802.3at standard has increased the power consumption available to devices over network connections. As such, more powered devices, such as Internet Protocol (IP) cameras, IP card readers, IP phones, wireless access points, etc., are being added to networks and consuming power.

Powered devices are powered by the power sourcing equipment. However, as more and more powered devices are connected to power sourcing equipment, such as network switches or hubs, power sourcing equipment providing power to its powered devices can become oversubscribed or otherwise unable to provide sufficient power to its powered devices. As such, power sourcing equipment, under a standard and/or specification (e.g., IEEE 802.3af, IEEE 802.3at, etc.), may limit power to a PD to a particular level. Further, PDs can expect to receive power up to a particular level according to the standard.

In certain examples, a standard is a set of rules that devices should and/or shall follow in a power over network system. In the IEEE 802.3af standard or IEEE 802.3at type 1 standard, the PSE is required to be able to deliver 15.4 watts of power to a PD. In the IEEE 802.3at type 2 standard, the PSE is required to be able to deliver 34.2 watts of power to a PD. On the other hand the standards provide for PDs to expect 12.95 and 25.5 watts of power for the respective standards sections. The difference between the power supplied by the PSE and the expectation of the respective PDs is partly because of resistance in cabling between PSEs and PDs. Further, the length of the cable between the respective PSEs and PDs can affect the difference in the power supplied by the respective PSEs and the expectation of the respective PDs. As such, a PSE providing a first amount of power (e.g., 15.4 watts or 34.2 watts) may mean that power available at the PD is at least a second amount of power (e.g., 12.95 watts or 25.5 watts). It may also mean that there is more power available at the PD. This can occur, for example, if a less resistive cable is used and/or a shorter cable than the longest cable allowed for by the standard is used.

PDs, however, may be able to accomplish more with additional power than the power level set by the standard followed. As such, a PD or a developer of a PD may wish to be able to set power use of the PD based on the amount of power that is available to the PD instead of the amount expected by the standard that is being followed. US 2007/0257780 A1 discloses a method and system for requesting in-line power at a powered device.

Accordingly, various embodiments disclosed herein relate to determining the amount of power available at the PD, wherein aspects of the invention are specified in independent claims 1 and 10. Once the amount of power available at the PD is determined, the PD can use power/performance settings to efficiently use the available power. To determine the available power load, the PD can set a power load to a predetermined level. This can be based on an initial power load of the PD plus a fixed or dynamic load based on a power circuit. The power loads can be determined based on a testing of the PD. Once the power load is set, the power drawn from the power load can be increased. A representation of the power load can be stored in a non-volatile memory. The power load can be increased until one or more criteria are met. The criteria can include, for example, a threshold power level (e.g., the maximum amount of power that should be supplied by the PSE according to a standard), whether power is shut off by the PSE, or the like. For example, the PSE may remove power from the PD if the power consumed by the PD is more than a threshold amount or more than the PSE is capable of providing. On the next power up of the PD, the stored representation can be used as the amount of power available to the PD. In certain scenarios, if the threshold power level is met without removal of power, another power up need not be applied to use the stored representation.

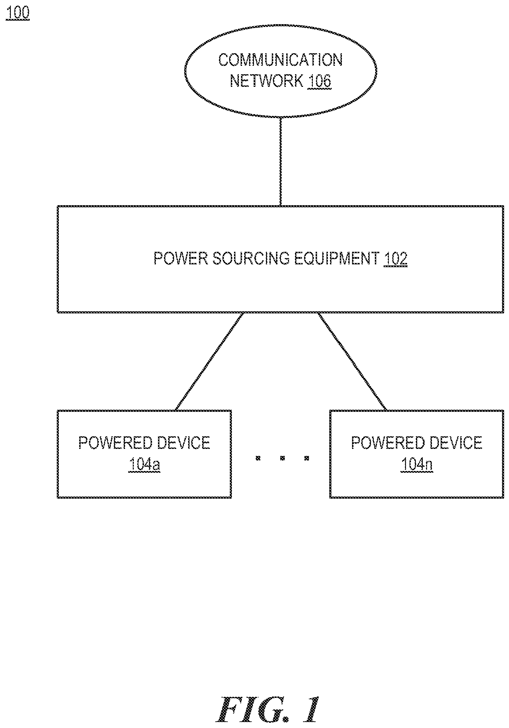

FIG. 1 is a block diagram of a system including devices powered by power sourcing equipment, according to one example. The system 100 can include a power sourcing equipment 102 that communicates with one or more powered devices 104a - 104n. Further, the PDs 104 can be connected to a communication network 106 via the PSE 102. In certain scenarios, the PDs 104 can be connected to the communication network 106 via another connection. In certain examples, PSEs 102 are network devices (e.g., switches, midspans, etc.) that are capable of providing power over a network connection (e.g., according to a PoE standard or system). Further, in some examples, PDs 104a - 104n are devices powered by a network connection (e.g., via power sourcing equipment such as PSE 102). PDs 104 can be considered network powered devices that receive power via at least one network connection (e.g., via the PSE 102). As noted, the power reception can be based on a standard or specification, such as a PoE standard or proprietary specification.

In certain examples, PDs 104a - 104n are computing devices, such as network storage devices, servers, client computers, laptop computers, desktop computers, mobile computers, tablets, pad devices, terminals, other computing devices that can be powered via a network connection, etc. In other embodiments, the PDs 104a - 104n can include special purpose machines such as media players, routing devices, communication devices, etc. The PSE 102 and the PDs 104 can be implemented via a processing element, memory, and/or other components. For example, the PD 104 can be an all-in-one thin client.

The communication network 106 can use wired communications, wireless communications, or combinations thereof. Further, the communication network 106 can include multiple sub communication networks such as data networks, wireless networks, telephony networks, etc. Such networks can include, for example, a public data network such as the Internet, local area networks (LANs), wide area networks (WANs), metropolitan area networks (MANs), cable networks, fiber optic networks, combinations thereof, or the like. In certain examples, wireless networks may include cellular networks, satellite communications, wireless LANs, etc. Further, the communication network 106 can be in the form of a direct network link between devices. Various communications structures and infrastructure can be utilized to implement the communication network(s). In certain examples, a direct link is used to connect the PDs 104 to the PSE 102. Other sets of PSEs and PDs as well as other devices can be communicated with via the communication network 106.

By way of example, the PSE 102 and PDs 104 communicate with each other and other components with access to the communication network 106 via a communication protocol or multiple protocols. A protocol can be a set of rules that defines how nodes of the communication network 106 interact with other nodes. Further, communications between network nodes can be implemented by exchanging discrete packets of data or sending messages. Packets can include header information associated with a protocol (e.g., information on the location of the network node(s) to contact) as well as payload information. A program or application executing on the PSE 102 or the PDs 104 can utilize one or more layers of communication to utilize the messages. In certain scenarios, an Ethernet cable (e.g., a Category (CAT) 3 cable, a CAT 5 cable, etc.) can be used to connect the PSE 102 to the PDs 104 and/or other network elements. The Ethernet cable can carry both power and communications. Different cables can have different resistances and/or lengths. As such, using one cable instead of another can change the amount of power available at a PD 104.

In certain scenarios, when activated, a PD 104 powers up and negotiates an amount of power to receive from the PSE 102. Both the PSE 102 and the PD 104 can comply with a standard (e.g., a PoE standard) to provide power to the PD 104. According to the standard, the PSE 102 can be required to supply an output power level of at least a certain threshold. For example, the maximum power required to be delivered at the highest negotiated power level for a PSE 102 under the 802.3af standard is 15.4 watts. Further, according to the standard, the PD 104 can be allowed to assume that an input power level of at least a certain threshold. For example, at the highest negotiated power level, the PD 104 can expect to receive 12.95 watts of power from the PSE 102 according to the 802.3af standard.

As noted, PDs 104 can use extra power made available from the PSE 102 in various ways. As such, the PD 104 may desire to know the amount of power that is actually available to it from the PSE 102. Further, in certain scenarios, the PD 104 may not want to utilize an excessive amount of power (e.g., a power level more than the standard would require the PSE 102 to provide).

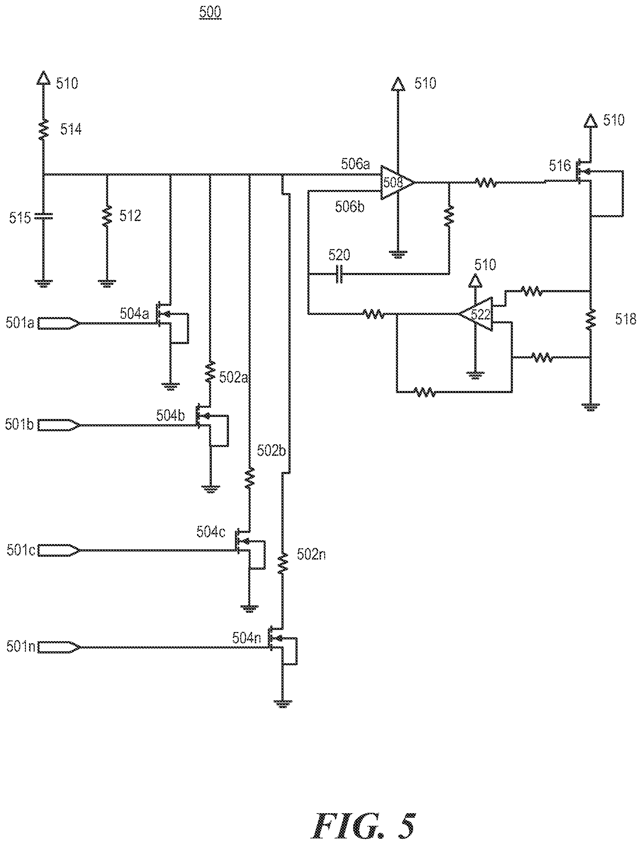

To determine the amount of power that is available to the PD 104, the PD 104 can set a power load and keep an identifier of the amount of the power load. The initial power load the PD 104 sets can be below or equal to the amount of power the PD 104 can expect to receive (e.g., 12.95 watts according to the 802.3af standard). A power circuit, for example, the power circuit shown in FIG. 5, can be used to generate at least part of the power load. Other portions of the power load can come from components of the PD 104. Additional power used at other components of the PD 104 can be used to distribute the amount of power load. This further allows for the distribution of heat during the power loading. The other components can be set at predetermined usage levels to use a target amount of power. Further, in certain examples, a sensor can be used to determine the amount of power being consumed by the other components. For example, a power meter circuit can be used to monitor the total power used by the PD 104. The power meter circuit can feed information to a control of a power circuit controlling the power load.

The PD 104 can increase the power load using the power circuit and store a representation of the power load (e.g., by setting a variable) in a non-volatile memory. The PD 104 can wait to provide the PSE 102 with time to recognize and/or adjust to the increased power load. The PSE 102 can be set to remove power from the PD 104 if it attempts to use more than a set amount of power (e.g., an amount of power set by a standard/specification). This process can repeat until the power level meets one or more criteria. A first criterion can be that if the power level meets a threshold number of increments and/or a certain power level, the process is stopped. In one example, the certain power level can be a maximum amount of power the PSE 102 should be required to provide, for example 15.4 watts in the 802.3af standard.

Another example criterion is that if there is a loss of power to the PD 104, the process is exited. Further, a memory address can be marked that the process has previously occurred so that the PD 104 knows that a representation of the power level available is stored in the non-volatile memory. The loss of power from the PSE 102 can be because of a setting of the PSE 102 to cutoff a PD 104 attempting to consume more power than that allotted. As noted, this can be in compliance with a standard being followed. Moreover, this is a reason to allow for a delay before increasing the power load. In either case, the PD 104 can boot to an operating state. The power level available stored in the non-volatile memory can be used by an operating system, a controller, or other hardware to set performance and/or power settings of the PD 104. Examples of adjusting such settings include adjusting brightness of a screen, raising or lowering voltage to a processor, raising or lowering clock speed, etc. In certain embodiments, a power level available is the power level that PD 104 determines from the testing process based on the criteria.

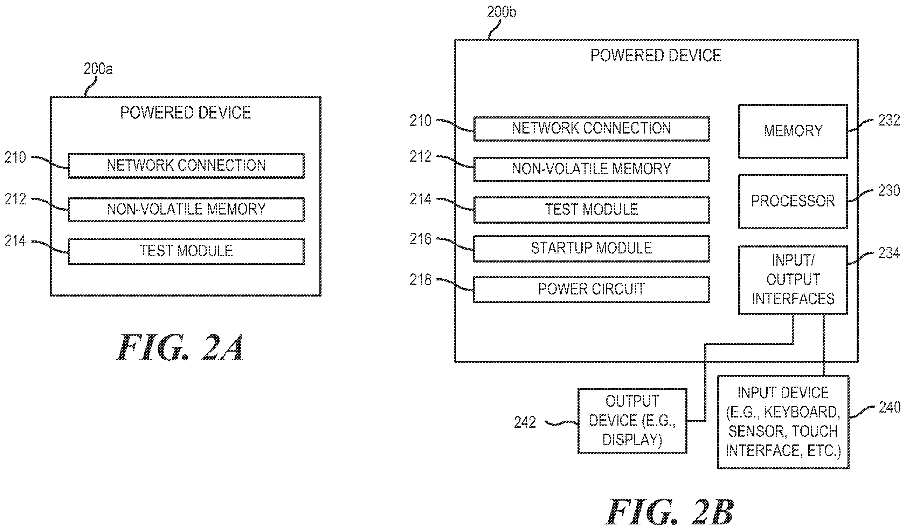

FIGs. 2A and 2B are block diagrams of powered devices capable of setting a power load to determine power available to the respective powered devices, according to various examples. PDs 200a, 200b include components that can be utilized to determine an amount of power over a network connection that is available to the respective PDs 200. The respective PDs 200a, 200b may be a notebook computer, a desktop computer, a tablet computing device, a wireless device, a workstation, a communication device, or any other computing device.

The PD 200 can include a physical network connection 210. The network connection 210 can provide the PD 200 with communication information from outside of the PD 200. Further, the network connection 210 can provide the PD 200 with power. As noted, this can be implemented using one or more standards, for example, PoE standards.

The PD 200 can also include non-volatile memory 212. The non-volatile memory 212 can be in the form of a memory chip, another type of storage, or another memory structure. Examples of non-volatile memory 212 can include flash memory, ferroelectric random-access memory (RAM), magnetic storage, non-volatile random-access memory (NVRAM), etc. Non-volatile memory 212 is computer memory that can retain stored information when it is not powered. As such, the non-volatile memory 212 can be set and retain information when the PD 200 does not have access to power.

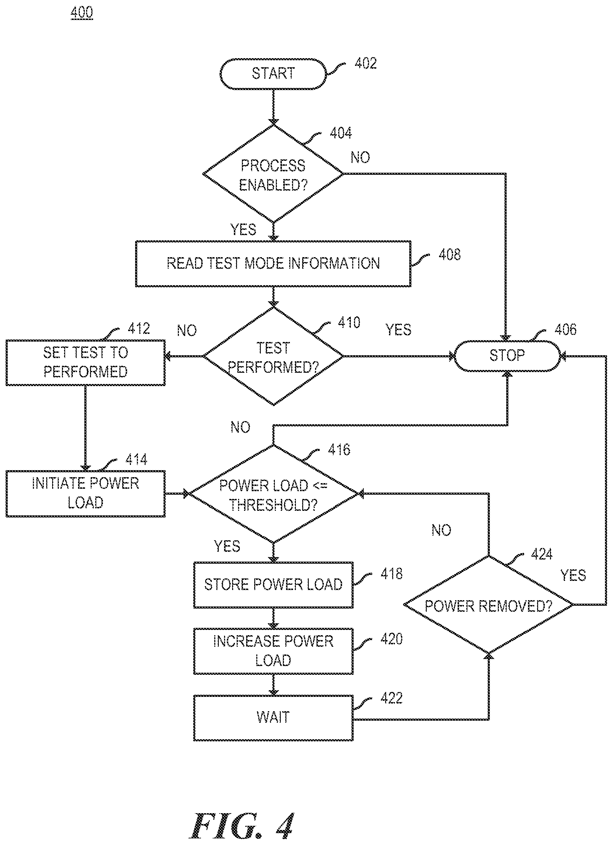

A test module 214 of the PD 200 can be used to determine power available at the PD via the network connection 210. As further detailed in FIG. 4, the test module can set an address of the non-volatile memory 212 to indicate that a test has been initiated. This memory address, when checked by a startup module 216, can tell the PD 200 during the last boot, the test module 214 has been run and that a representation of the power available is stored in another address of the non-volatile memory 212. In certain examples, one or more chips or other storage units can be used to implement the non-volatile memory 212.

Then, the test module 214 can initiate a load of a power circuit 218 to a first power level. The first power level can be based on a standard, for example, based on the amount of power that can be expected by the PD 200 according to the standard. Further, the first power level can be considered an initial load threshold. In one example, a PD 200 associated with the IEEE 802.3af standard can expect 12.95 W of power to be available. This can be used to set the first power level to around 12.95 watts. For example, the first power level can be slightly below, nearby, or slightly above the 12.95 watt level. The first power level can include the total power consumption by the PD 200, including chip power usage. The test module 214 can cause a reset to be activated on any unused chips, logic, etc. on the PD 200 so that the power level of the chips is close to constant. As such, a power load using a power circuit 218 can be added to set the power load to the first power level.

The power circuit 218 can be implemented in various ways. The power circuit 218 can be used to load a known amount of power. This power load can be set by a controller, a digital to analog converter, or other control mechanism. Further, a power consumption circuit measuring the amount of power used by the PD 200b can feed into the control. An example of a power circuit 218 is shown in FIG. 5. However, it is contemplated that other power circuits can be used, for example, using one or more power resistors that can be set between a voltage source and ground. The power resistors can be activated using a transistor that in a first state has one end of the power resistor floating and in a second state allows the power resistor to complete the circuit to ground.

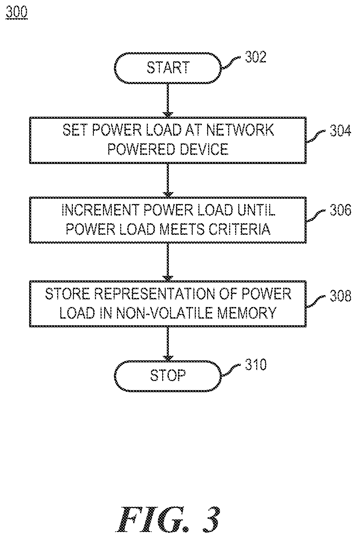

The test module 214 can then cause the power circuit 218 to increase the load of the power circuit 218 based on whether one or more criteria is met. For example, the power load can be increased until power is removed from the network powered device or a threshold limit (e.g., a maximum possible output expected from a PSE according to a standard) is reached. The test module 214 can cause storage of a representation of the power load in the non-volatile memory 212 as the power load is increased. The representation can identify the amount of power consumed by the PD 200. The increase of the power consumed can be incremented as part of a process (e.g., the processes of FIGs. 3 or 4). Further, during each increment, a representation of the power load can be updated in another address of the non-volatile memory 212. In certain examples, the representation can be an identifier of how many increments were used before power was cut from the PD 200 or a maximum power threshold is reached. A lookup table can be used to associate the increments with power levels. Additionally or alternatively, the power level can be stored as an integer or floating point number. The representation can be associated with a value of the power level before or after increasing the power level.

In certain scenarios, the other address can be the same address as the memory used to indicate that the test has been initiated. This can occur, for example, on the basis that if the address is set to a known setting (e.g., NULL), a test has not been performed and if the address is set, the test has been run and the information located at the address represents the amount of power available to the PD 200. As noted above, the PSE providing power to the PD 200 can remove power to the PD 200 if the power consumed by the PD 200 goes above a threshold level (e.g., a threshold set by an associated standard).

The startup module 216 can be run when power is applied to the PD 200. When power is applied, the startup module 216 can execute and determine whether to run the test module 214 or to have the PD 200 move to an operating state. The startup module 216 can read the address from the non-volatile memory 212. The startup module 216 can determine whether the address indicates that a representation of the power available is stored in the non-volatile memory 212 (e.g., at the other address). If the test module 214 was not previously run, the startup module 216 can run the test module 214. If the test module 214 was previously run, the startup module 216 can bypass the test module 214 and initiate boot of the operational state, for example by initiating boot of an operating system of the PD 200. The operating system can be provided the information regarding the power available. For example, the operating system can read the other address to retrieve the power available information. Further, the operating system can adjust one or more performance settings of the PD 200 based on the power available information. For example, the performance of a processor 230 can be throttled and/or increased based on the information about the power available. Moreover, the PD 200 can monitor the amount of power consumed by the PD 200 in the operational mode to dynamically change settings. For example, if the power consumed in the operational mode is close to the power available, the PD 200 may change the settings to reduce power consumption. Additionally or alternatively, voltage settings can be changed based on the power available information. Additionally or alternatively, other components (e.g., hardware) of the PD 200 can use the representation to change performance and/or power settings (e.g., shut down one or more components). As such, the PD 200 can use the representation as a maximum power threshold. Further, in certain examples, one or more sensors can be used to determine the amount of power consumed by the PD 200.

A processor 230, such as a central processing unit (CPU) or a microprocessor suitable for retrieval and execution of instructions and/or electronic circuits can be configured to perform the functionality of any of the modules 212, 214 or part of the power circuit 218 described herein. In certain scenarios, instructions and/or other information, such as power level information, can be included in memory 232 or other memory (e.g., the non-volatile memory 212). Input/output interfaces 234 may additionally be provided by the powered device 200b. For example, input devices 240, such as a keyboard, a sensor, a touch interface, a mouse, a microphone, etc. can be utilized to receive input from an environment surrounding the PD 200b. Further, an output device 242 can be utilized to present information to users. Examples of output devices include speakers, display devices, amplifiers, etc. Moreover, in certain embodiments, some components can be used to implement functionality of other components described herein.

Each of the modules 214, 216 or other components, e.g., power circuit 218 may include, for example, hardware devices including electronic circuitry for implementing the functionality described herein. In addition or as an alternative, each component may be implemented as a series of instructions encoded on a machine-readable storage medium and executable by processor 230. It should be noted that, in some embodiments, some modules are implemented as hardware devices, while other modules are implemented as executable instructions.

Processor 230 may be at least one CPU, at least one semiconductor-based microprocessor, at least one graphics processing unit (GPU), other hardware devices suitable for retrieval and execution of instructions stored in machine-readable storage medium, or combinations thereof. For example, the processor 230 may include multiple cores on a chip, include multiple cores across multiple chips, or combinations thereof. Processor 230 may fetch, decode, and execute instructions to implement the processes of FIGs. 3 and/or 4. As an alternative or in addition to retrieving and executing instructions, processor 230 may include at least one integrated circuit (IC), other control logic, other electronic circuits, or combinations thereof that include a number of electronic components for performing functionality. A machine-readable storage medium may be any electronic, magnetic, optical, or other physical storage device that contains or stores executable instructions. Thus, machine-readable storage medium may be, for example, Random Access Memory (RAM), an Electrically Erasable Programmable Read-Only Memory (EEPROM), a storage drive, a Compact Disc Read Only Memory (CD-ROM), and the like. As such, the machine-readable storage medium can be non-transitory.

FIG. 3 is a flowchart of a method for determining power available at a powered device, according to one example. Although execution of method 300 is described below with reference to PD 200b, other suitable components for execution of method 300 can be utilized (e.g., PD 200a, PD 104, etc.). Method 300 may be implemented in the form of executable instructions stored on a machine-readable storage medium, and/or in the form of electronic circuitry.

The method 300 starts at 302 and proceeds to 304, where a power load of a network powered device, e.g., PD 200b, is set. The setting can be part of the execution of a test module 214. Further, as noted above, the power load can be based on a standard. For example, the power load can represent an amount of power that the PD 200b can expect to receive from a PSE 102 providing power via a network connection 210. Further, the power load can be based on the amount of power the PD 200b expects to receive according to a standard. The power load can be a total power load of the PD 200b and can include a power load of one or more components of the PD 200b as well as a power load of a power circuit 218.

The setting of the power load can be used to determine how much power is available to the PD 200b from the PSE 102. At 306, the test module 214 incrementally increases the power drawn by the power load one or more times until the power load meets one or more criteria. The criteria can include the removal of power to the PD 200b, a threshold power level, a number of increments, a maximum increment level, combinations thereof, or the like. In certain embodiments, a maximum increment level is a number of increments and/or a power threshold. The associated power threshold can be associated with a maximum amount of power a PSE 102 is supposed to support based on a standard. The removal of power can be initiated by the PSE 102. A delay (e.g., 100ms, 1s, etc.) can be caused by the PD 200b between each increment to allow for the PSE 102 determine that an excessive amount of power is being drawn by the PD 200b and shutting down the power. The PSE 102 may also send another indication that the PD 200b is drawing too much power that can be used as a trigger instead of the removal of power.

At 308, the test module 214 stores a representation of the power load in a non-volatile memory for each increment. An increment can be a fixed amount of power to add each time the power drawn is increased. Further, an increment can also be a variable amount of power to add when the power level is increased. The variable amount of power can be known. For example, each increment can be associated with a power state that is associated with a lookup table. As such, each increment can be associated with a known power level. The representation of the power load can be updated before or after each increment of power. Based on the storage scheme, the last usable amount of power used can be determined from the representation. This can represent a maximum increment level. As noted, the incrementing can stop when one or more of the criteria are reached. Then, at 310, the method 300 stops.

FIG. 4 is a flowchart of a method for determining power available at a powered device, according to one example. Although execution of method 400 is described below with reference to PD 200b, other suitable components for execution of method 400 can be utilized (e.g., PD 200a, PD 104, etc.). Method 400 may be implemented in the form of executable instructions stored on a machine-readable storage medium, and/or in the form of electronic circuitry.

The method 400 starts at 402 and proceeds to 404, where a startup module 216 of the PD 200b determines whether a test process associated with a test module 214 is enabled. The startup module 216 can also drive other circuitry to a reset stage while the startup is initializing. The process can be marked as enabled and/or disabled in a memory or register, for example, non-volatile memory 212, via a switch, via other circuitry, or the like. For example, in certain examples, the test module 214 can increment the value of a register, which is read to determine if the test process is enabled. The register can be cleared or reset when the PD 200b is booted to an operational mode. If the test process is not enabled, the process 400 stops at 406 and the PD 200b boots to an operational mode, where the PD 200b may perform other functionality. This can be used as a failsafe mechanism or if the user does not wish to run the test to determine the amount of power available to the PD 200b.

If the test process is enabled, the startup module 216 executes and reads test mode information at 408. The test mode information can include information that indicates whether the test was performed in a previous use of the PD 200b. This information can be set in one of various ways, e.g., using a memory identifier, via a register, via another memory, etc. Then, at 410, the startup module 216 determines whether the test mode has been executed in a previous power up sequence. If the test mode has been previously executed, the method 400 stops at 406 and the PD 200b is booted to an operational mode of the PD 200b. As noted, this can be based on a memory identifier that has been read. Further, in certain examples, the memory identifier can be reset or set to a state indicating that the next time the PD 200b receives power, the power available should be tested. A power available indicator may be stored in a non-volatile memory 212.

If the startup module 216 determines that a test was not performed (e.g., the memory identifier was not set), the method 400 continues to 412, where test module 214 is executed and sets the memory identifier to indicate that the test has been initiated. This can also indicate that the test has been performed in a later boot.

At 414, the test module initiates a power load. As noted above the power loaded can be associated with a standard expectation for the PD 200b. The power load can be implemented via a power circuit 218 including one or more resistors, one or more power transistors, a digital-to-analog convertor, or a combination thereof. Further, the power level of the power circuit 218 can be incremented. An example of such a circuit is described in FIG. 5. In some embodiments, a network of resistors can be used to control the incrementing of the power load. The power load can be stored in a non-volatile memory 212. The address of the memory can be known as a storage location for power available to the PD 200b.

The power circuit 218 can start a loop to increase the power level consumed by the PD 200b. At 416, the test module 214 can determine the relationship between the power load and a threshold. As noted above, the threshold can be a maximum level associated with a standard that a PSE providing power to the PD 200b is required to provide to conform to the standard. If the power load is greater than, equal to, or a combination thereof to the threshold, the method 400 stops at 406. The PD 200b can then boot to an operational state. The representation of the power load can be used as the maximum available power the PD 200b can expect from the PSE.

If the power load is less than or equal to the power threshold, a representation of the power load is stored (418). Then, at 420, the power load is increased. This can occur by adding additional load using the power circuit 218. After the load is increased, the PD 200b waits at 422. The wait (e.g., 100 ms, 500 ms, 1 s, etc.) can be used to provide the PSE with time to acknowledge the increased power consumption and allow the PSE time to remove power before incrementing the power load again.

Then, at 424, the power can be removed from the PD 200b by the PSE. If the power is removed, the method 400 stops at 406. The next time the PD 200b is powered up the method can be started at 402. In this iteration, at 410, the test is considered performed and the system is booted to the operational state. At this time, the stored representation can be used to determine an available power level to the PD 200b. If power is not removed, the method returns to 416 and continues until power is removed or the threshold is met. The order of storing the power load representation, the increasing the power load, etc. can be changed.

FIG. 5 is a diagram of a power circuit used to determine power available at a powered device, according to one example. Circuit 500 can include one or more control signals 501a - 501n that are used in conjunction with a set of resistors 502a - 502n and transistors 504a - 504n to control a first input 506a of a first operational amplifier 508. If line 501a is high, the first input 506a is driven to ground and the power circuit 500 is not operational. Otherwise, the voltage at the first input 506a can be determined by which of the resistors 502a - 502n are connected to ground because the control signals 501b - 501n are high. Although four control signals are shown, additional control signals can be used. The voltage at 506a can thus be determined by a power line 510, the resistors 502a - 502n, 512 that are connected to ground, a resistor 514 connected to the power line 510. The power line resistor 514 and the resistors 502a - 502n that are connected to ground create a voltage divider determining voltage at the first input 506a. A capacitor 515 can be used to provide additional stability to the voltage at 506a. In certain scenarios, a DAC (e.g., one controlled by a controller) can be used to drive the first input 506a.

The power circuit 500 can control the gate of a power transistor 516 so that a second input 506b of operational amplifier 508 matches the reference voltage at the first input 506a. In certain embodiments, the power transistor 516 is a field-effect transistor (FET) such as a power metal-oxide semiconductor FET (MOSFET). The initial amount of load can be determined based on the power usage of components of the PD that includes the circuit 500. A baseline can be determined, for example, when the PD is in a reset mode. As such, an initial power load can be set when control signal 501a is low and the other control signals 501b - 501n are low. When this power load is added to the power consumed by the rest of the PD, the total power load of the PD results in a first power level that represents the amount of power consumed by the PD as a whole. The first power level can be associated with an expectation of the PD or a default starting point. The power consumption can then be increased by increasing the reference voltage at the first input 506a.

A feedback loop of the circuit 500 controls the output of the operational amplifier 508 so that when the voltage at 506b is lower than the voltage at 506a, the gate of 516 is driven higher. This turns the power transistor 516 on more causing the current through the power transistor 516 to increase and increases the voltage over a resistor 518 (e.g., a power resistor at .01 ohms, .05 ohms, etc.). The resistor 518 controls the current that flows over the power transistor 516. As power = current times the voltage drop over the transistor, the power consumption can be controlled. The circuitry can account for the power consumed over the resistor as well as the power transistor 516. Further, higher voltage across the resistor 518 leads to a higher voltage at 506b. When the voltage at 506b is higher than the voltage at 506a, the operational amplifier 508 drives a lower voltage to the gate of the power transistor 516. This decreases the voltage across the resistor 518, lowers the power consumption, and the voltage at 506b. With the feedback loop, a constant or near constant current is driven through the power transistor 516. The feedback loop can include a capacitor 520 to block current from flowing between 506b and the output of the operational amplifier 508. Further, the feedback loop can include another operational amplifier 522 and circuitry to drive the voltage level at 506b.

With the above approaches, the power level available to a PD can be determined. The power level can be based on storing a representation of the power of the PD consumed when the PD is shut off by a PSE providing the power. The power level can also be based on one or more thresholds determined by a standard or specification. The PD can use the available power level to set one or more settings (e.g., performance settings, power settings, etc.).

## Claims

1. A method comprising:
setting a power load in a network powered device (104) and storing a representation of the power load in a non-volatile memory;
incrementally increasing the power drawn by the power load one or more times until the power load meets one or more criteria,
wherein the criteria include removal of power to the network powered device (104) and reaching of a threshold power level; and
storing an updated representation of the power load in the non-volatile memory (212) for each increment wherein the representation of the power load corresponds to the amount of power available to the powered device.

2. The method of claim 1, wherein the criteria further includes a maximum increment level.

3. The method of claim 1, further comprising:
setting a memory identifier indicating that a test mode for setting the power load has been initiated.

4. The method of claim 3, further comprising:
determining to boot to an operational mode of the network powered device (104) based on the memory identifier.

5. The method of claim 4, further comprising:
changing performance settings of the operational mode based on the representation.

6. The method of claim 1, wherein the representation describes an incremental power level before the power is removed from the network powered device (104).

7. The method of claim 1, wherein a load circuit including a resistor, a power transistor, and a digital-to-analog converter is used to increment the power load.

8. The method of claim 1, wherein a network of resistors is used to control the incrementing of the power load.

9. The method of claim 1, wherein the network powered device (104) is powered via an Ethernet cable.

10. A powered device comprising:
a network connection, wherein the network connection provides power to the powered device (104);
a test module (214);
a non-volatile memory (212); and
at least one processor to set the powered device (104) to a reset state,
wherein the at least one processor determines to enable the test module (214) based on the non-volatile memory,
wherein the test module (214) sets a power load to increase power consumption of the powered device (104) to an initial load threshold, **characterized in that** the test module (214) increases the power load based on at least one of: the powered device (104) losing power and the powered device reaching a maximum threshold, wherein the test module (214) stores a representation of the power load in the non-volatile memory (212) as the power load is increased wherein the representation corresponds to the amount of power available to the powered device (104).

11. The powered device of claim 10, wherein the at least one processor bypasses the power test module (214) based on the non-volatile memory, wherein the at least one processor causes the powered device (104) to boot into an operational state, and wherein the powered device (104) uses the identifier as a maximum power threshold.

12. The powered device of claim 9 or 10, wherein the test module (214) is configured to increase the power load incrementally.

13. The powered device of claim 12, wherein during each increment a representation of the power load is updated in another address of the non-volatile memory (212).

14. The powered device of claim 13, further comprising a startup module (216) to determine whether the address indicates that a representation of the power available is stored in the non-volatile memory (212) wherein the startup module (216) can bypass the test module (214) and initiate boot of the operational state of the powered device.

## Patentansprüche

1. Verfahren, Folgendes umfassend:
Einstellen einer Leistungsbelastung in einer netzwerkbetriebenen Vorrichtung (104) und Speichern einer Darstellung der Leistungsbelastung in einem nicht flüchtigen Speicher;
ein- oder mehrmaliges stufenweises Erhöhen der durch die Leistungsbelastung aufgenommenen Leistung, bis die L Leistungsbelastung einem oder mehreren Kriterien entspricht,
wobei die Kriterien das Entfernen von Leistung zu der netzwerkbetriebenen Vorrichtung (104) und das Erreichen einem Schwellenwertleistungspegel umfassen; und
Speichern einer aktualisierten Darstellung der Leistungsbelastung in dem nicht flüchtigen Speicher (212) für jede Erhöhungsstufe, wobei die Darstellung der Leistungsbelastung der Menge an Leistung entspricht, die für die betriebene Vorrichtung verfügbar ist.

2. Verfahren nach Anspruch 1, wobei die Kriterien ferner einen maximalen Erhöhungspegel enthalten.

3. Verfahren nach Anspruch 1, ferner Folgendes umfassend:
Einstellen eines Speicheridentifikators, der angibt, dass ein Testmodus zum Einstellen der Leistungsbelastung eingeleitet worden ist.

4. Verfahren nach Anspruch 3, ferner Folgendes umfassend:
Bestimmen, auf der Basis des Speicheridentifikators, in einen Betriebsmodus der netzwerkbetriebenen Vorrichtung (104) hochzufahren.

5. Verfahren nach Anspruch 4, ferner Folgendes umfassend:
Verändern der Leistungseinstellungen des Betriebsmodus auf der Basis der Darstellung.

6. Verfahren nach Anspruch 1, wobei die Darstellung einen Erhöhungsleistungspegel beschreibt, bevor die Leistung von der netzwerkbetriebenen Vorrichtung (104) entfernt wird.

7. Verfahren nach Anspruch 1, wobei ein Belastungskreis, der einen Widerstand, einen Leistungstransistor und einen Digital-Analog-Wandler umfasst, verwendet wird, um die Leistungslast stufenweise zu erhöhen.

8. Verfahren nach Anspruch 1, wobei ein Netzwerk von Widerständen verwendet wird, um das stufenweise Erhöhen der Leistungslast zu steuern.

9. Verfahren nach Anspruch 1, wobei die netzwerkbetriebene Vorrichtung (104) über ein Ethernet-Kabel betrieben wird.

10. Betriebene Vorrichtung, Folgendes umfassend:
eine Netzwerkverbindung, wobei die Netzwerkverbindung der betriebenen Vorrichtung (104) Leistung bereitstellt;
ein Testmodul (214);
einen nicht flüchtigen Speicher (212); und
wenigstens einen Prozessor, um die betriebene Vorrichtung (104) in einen zurückgesetzten Zustand zu versetzen,
wobei der wenigstens eine Prozessor auf der Basis des nicht flüchtigen Speichers bestimmt, das Testmodul (214) zu aktivieren,
wobei das Testmodul (214) eine Leistungsbelastung dahin gehend einstellt, den Leistungsverbrauch der betriebenen Vorrichtung (104) auf einen anfänglichen Belastungsschwellenwert zu erhöhen,
**dadurch gekennzeichnet, dass**
das Testmodul (214) die Leistungsbelastung auf der Basis zumindest entweder des Leistungsverlusts der betriebenen Vorrichtung (104) und/oder des Erreichens eines Höchstschwellenwertes der betriebenen Vorrichtung erhöht, wobei das Testmodul (214) eine Darstellung der Leistungsbelastung in dem nicht flüchtigen Speicher (212) speichert, wenn die Leistungsbelastung erhöht wird, wobei die Darstellung der Menge an Leistung entspricht, die für die betriebene Vorrichtung (104) verfügbar ist.

11. Betriebene Vorrichtung nach Anspruch 10, wobei der wenigstens eine Prozessor das Leistungstestmodul (214) auf der Basis des nicht flüchtigen Speichers umgeht, wobei der wenigstens eine Prozessor bewirkt, dass die betriebene Vorrichtung (104) in einen Betriebszustand hochfährt, und wobei die betriebene Vorrichtung (104) den Identifikator als einen Höchstleistungsschwellenwert verwendet.

12. Betriebene Vorrichtung nach Anspruch 9 oder 10, wobei das Testmodul (214) konfiguriert ist, um die Leistungsbelastung stufenweise zu erhöhen.

13. Betriebene Vorrichtung nach Anspruch 12, wobei während jede Erhöhungsstufe eine Darstellung der Leistungsbelastung in einer anderen Adresse des nicht flüchtigen Speichers (212) aktualisiert wird.

14. Betriebene Vorrichtung nach Anspruch 13, ferner ein Startmodul (216) umfassend, um zu bestimmen, ob die Adresse anzeigt, dass eine Darstellung der verfügbaren Leistung in dem nicht flüchtigen Speicher (212) gespeichert ist, wobei das Startmodul (216) das Testmodul (214) umgehen kann und das Hochfahren des Betriebszustands der betriebenen Vorrichtung einleiten kann.

## Revendications

1. Procédé comprenant:
l'établissement d'une charge de puissance dans un dispositif alimenté en réseau (104) et le stockage d'une représentation de la charge de puissance dans une mémoire non volatile ;
l'augmentation progressive de la puissance tirée par la charge de puissance une ou plusieurs fois jusqu'à ce que la charge de puissance réponde à un ou plusieurs critères,
dans lequel les critères comportent le retrait de puissance du dispositif alimenté en réseau (104) et l'atteinte d'un niveau de puissance seuil ; et
le stockage d'une représentation mise à jour de la charge de puissance dans la mémoire non volatile (212) pour chaque incrément dans lequel la représentation de la charge de puissance correspond à la quantité de puissance disponible pour le dispositif alimenté.

2. Procédé selon la revendication 1, dans lequel les critères comportent en outre un niveau d'incrément maximal.

3. Procédé selon la revendication 1, comprenant en outre :
l'établissement d'un identifiant de mémoire indiquant qu'un mode de test pour régler la charge de puissance a été initié.

4. Procédé selon la revendication 3, comprenant en outre :
la décision de démarrer dans un mode opérationnel du dispositif alimenté en réseau (104) sur la base de l'identifiant de mémoire.

5. Procédé selon la revendication 4, comprenant en outre :
le changement des paramètres de performance du mode opérationnel sur la base de la représentation.

6. Procédé selon la revendication 1, dans lequel la représentation décrit un niveau de puissance incrémentiel avant que la puissance ne soit retirée du dispositif alimenté en réseau (104).

7. Procédé selon la revendication 1, dans lequel un circuit de charge comportant une résistance, un transistor de puissance et un convertisseur numérique-analogique est utilisé de manière à incrémenter la charge de puissance.

8. Procédé selon la revendication 1, dans lequel un réseau de résistances est utilisé de manière à commander l'incrémentation de la charge de puissance.

9. Procédé selon la revendication 1, dans lequel le dispositif alimenté en réseau (104) est alimenté par l'intermédiaire d'un câble Ethernet.

10. Dispositif alimenté comprenant :
une connexion réseau, dans lequel la connexion réseau fournit une puissance au dispositif alimenté (104) ;
un module de test (214) ;
une mémoire non volatile (212) ; et
au moins un processeur de manière à définir le dispositif alimenté (104) dans un état de réinitialisation,
dans lequel ledit processeur décide d'autoriser le module de test (214) sur la base de la mémoire non volatile,
dans lequel le module de test (214) établit une charge de puissance de manière à augmenter la consommation électrique du dispositif alimenté (104) jusqu'à un seuil de charge initial,
**caractérisé en ce que** le module de test (214) augmente la charge de puissance sur la base au moins : du dispositif alimenté (104) perdant de la puissance et du dispositif alimenté atteignant un seuil maximal, dans lequel le module de test (214) stocke une représentation de la charge de puissance dans la mémoire non volatile (212) lorsque la charge de puissance est augmentée, dans lequel la représentation correspond à la quantité de puissance disponible pour le dispositif alimenté (104).

11. Dispositif alimenté selon la revendication 10, dans lequel ledit processeur contourne le module de test de puissance (214) sur la base de la mémoire non volatile, dans lequel ledit processeur amène le dispositif alimenté (104) à démarrer dans un état opérationnel, et dans lequel le dispositif alimenté (104) utilise l'identifiant comme seuil de puissance maximal.

12. Dispositif alimenté selon la revendication 9 ou 10, dans lequel le module de test (214) est configuré pour augmenter la charge de puissance de manière progressive.

13. Dispositif alimenté selon la revendication 12, dans lequel, au cours de chaque incrément, une représentation de la charge de puissance est mise à jour dans une autre adresse de la mémoire non volatile (212).

14. Dispositif alimenté selon la revendication 13, comprenant en outre un module de démarrage (216) de manière à déterminer si l'adresse indique qu'une représentation de la puissance disponible est stockée dans la mémoire non volatile (212), dans lequel le module de démarrage (216) peut contourner le module de test (214) et initier le démarrage de l'état opérationnel du dispositif alimenté.
